# EUROPÄISCHE PATENTSCHRIFT

(11) **EP 1 293 098 B1**
(45) Veröffentlichungstag und Bekanntmachung des Hinweises auf die Patenterteilung: **30.03.2005**
(21) Anmeldenummer: 01947171.3
(22) Anmeldetag: 22.05.2001
(51) Int. Cl.: H04Q 7/22, H04Q 7/24, H04L 29/06

(54) **MOBILFUNK-KOMMUNIKATIONSSYSTEM UND BETRIEBSVERFAHREN DAFÜR**
MOBILE RADIO COMMUNICATIONS SYSTEM AND METHOD FOR OPERATING THE SAME
SYSTEME DE TELEPHONIE MOBILE ET PROCEDE POUR LE FAIRE FONCTIONNER

(30) Priorität: 06.06.2000 DE 10027872
(43) Veröffentlichungstag der Anmeldung: 19.03.2003
(73) Patentinhaber: SIEMENS AKTIENGESELLSCHAFT, 80333 München (DE)
(72) Erfinder: GORETZKI, Manfred, 81371 München (DE); MÜLLER, Wilhelm, 85457 Wörth (DE); HULTSCH, Wolfgang, 81369 München (DE)
(86) Internationale Anmeldenummer: PCT/DE2001/001971
(87) Internationale Veröffentlichungsnummer: WO 2001/095647

(56) Entgegenhaltungen:
- WO-A-00/28775
- WO-A-00/31951

## Beschreibung

Die Erfindung betrifft ein Mobilfunk-Kommunikationssystem und ein Betriebsverfahren dafür.

Mobilfunksysteme wie das am Markt eingeführte GSM-System oder das in Entwicklung befindliche UMTS-System sind bekannt. Umfangreiche Entwicklungsbemühungen zielen gegenwärtig darauf ab, solche Mobilfunk-Kommunikationssysteme multimediafähig zu machen. Schlagworte hierfür sind das "Internet-Handy", mit dem es möglich werden soll, Internet-Inhalte mit einem Niveau an Schnelligkeit und Komfort abzufragen, die dem herkömmlichen Zugriff per Computer und Datenfernübertragung mit Hilfe konventioneller leitungsgebundener Telekommunikationsnetze zumindest ebenbürtig sein sollen, das WAP oder "Wireless Application Protocol" und andere.

WO 00/31951 A1 beschreibt ein Verfahren und ein drahtloses Kommunikationssystem mit mindestens zwei dazwischengeschalteten Vermittlungseinheiten (MSC), die mit je einem korrespondierenden Media Gateway verbunden sind. Damit wird die Verwendung von Kreis-Verbindungen in einem IP-Netz während eines Inter-MSC-handover reduziert. Sprachpakete werden zwischen einer ersten MSC und einer zweiten MSC über ein IP-Netz übermittelt. Eine IP-Adresse wird als Transaktions-Identifikation, die IP-Adresse, Socket und die Sitzungs-Nummer bezogen auf das verwendete Media-Gateway für den Anruf beinhalten kann, benutzt. Die Anker-MSC sendet die IP-Netzadresse, die derzeit genutzt wird zu der Nicht-Anker-MSC.

Die Erfindung beschreibt ein Mobilfunk-Kommunikationssystem mit einer zwischen einem Funknetzbereich des Mobilfunk-Kommunikationssystems und einem Festnetzbereich angesiedelten Mobilfunkvermittlungsstelle (MSC) für den Austausch von Transport- und Steuerdaten mit dem Funknetzbereich. Dabei ist ein Media-Gateway für die Anpassung des Formats von zwischen dem Festnetzbereich und dem Funknetzbereich auszutauschenden Transportdaten zwischen der Mobilfunkvermittlungsstelle und dem Festnetzbereich angeordnet. Die Mobilfunkvermittlungsstelle weist eine einheitliche Schnittstelle für die Übertragung von Transport- und Steuerdaten in Richtung zum und vom Festnetzbereich auf. Die Steuerdaten werden über die Schnittstelle sowohl in den Festnetzbereich zur direkten Weiterleitung an einen entfernten Kommunikationspartner als auch an ein Media Gateway zur Verarbeitung durch die Mobilfunkvermittlungsstelle übertragen.

Ein derartiges Verfahren bzw. eine derartige Vorrichtung wird vom Dokument D1 nicht beschrieben. Der Vorteil der Erfindung ist darin zu sehen, dass keine eigene Schnittstelle für die Kommunikation mit dem Media Gateway erforderlich ist. Die Erfindung ist damit neu. Es ist nicht zu erwarten, dass ein derartiges Verfahren ohne Kenntnis der Erfindung von einem Fachmann erdacht werden hätte können, weil es ausgehend vom Stand der Technik keine Anregung gibt. Vielmehr zielen das Dokument D1 darauf ab, dass Steuer- und Transportdaten radioseitig getrennt voneinander an einen Media Gateway und eine Mobilfunkvermittlungsstelle (MSC) übertragen werden, während erfindungsgemäß eine einheitliche Schnittstelle verwendet wird. Die Erfindung beruht somit auf einer erfinderischen Tätigkeit.

Ein Problem bei dem Bemühen, unterschiedliche Dienste in Mobilfunk-Kommunikationssystemen verfügbar zu machen, ist die Vielfalt an Datenformaten oder Ubertragungsprotokollen, die je nach Inhalt der Daten zur Übertragung der Daten zwischen den einzelnen Endgeräten eingesetzt werden. Die Notwendigkeit dieser Vielfalt ergibt sich aus den unterschiedlichen Anforderungen, die an die Übertragung der unterschiedlichen Datentypen gestellt werden. Während die Übertragung von Sprache hohe Anforderungen an die Schnelligkeit und Gleichmäßigkeit der Übertragung stellt, die Bandbreite der Sprachabtastung und damit der Übertragung aber notfalls variiert werden kann, um schwankenden Sende- und Empfangsbedingungen am Ort der mobilen Endgeräte Rechnung zu tragen, können bei der Übertragung von Dateien oder von Internet-Inhalten ein zeitlich ungleichmäßiger Datenfluss ohne weiteres toleriert werden; eine Möglichkeit, durch Bandbreitenbeschränkung die zu übertragende Datenmenge zu begrenzen, besteht aber nicht. Es ist deshalb notwendig, bei der Übertragung der Daten innerhalb des Mobilfunk-Kommunikationssystems zwischen sendendem und empfangendem Endgerät die Art der zu übertragenden Daten zu berücksichtigen, und außerdem müssen begleitend zu diesen, nachfolgend als Transportdaten bezeichneten Daten zusätzliche Daten übertragen werden, die Auskunft über die Art der Transportdaten, ggf. über eine zu ihrer Erzeugung verwendete Codierung und dergleichen geben, und die nachfolgend zusammen mit für den Verbindungsaufbau und die Vermittlung erforderlichen sogenannten Signalisierungsdaten mit dem Sammelbegriff "Steuerdaten" bezeichnet werden.

Beim Übergang zwischen Funk- und Festnetzbereich eines Mobilfunk-Kommunikationssystems kann eine Wandlung des Formats dieser Transportdaten erforderlich oder im Interesse einer effizienten Bewirtschaftung der Netzressourcen wünschenswert sein. Den Übergang zwischen Funknetzbereich und Festnetzbereich bilden Mobilfunkvermittlungsstellen, auch als MSC (Mobile Switching Center) bezeichnet.

Im 1999er-Release der UMTS-Standards, veröffentlicht von 3GPP (3rd Generation Partnership Project) unter der Bezeichnung "3G TS 23.002 V3.3.0 (2000-03); Technical Specification Group Services and Systems Aspects; Network architecture" werden MSCs eingesetzt, die mit geringen Abwandlungen den MSCs des GSM-Standards entsprechen. Die Funktionen der Vermittlung der Transportdaten mit Hilfe eines Koppelfeldes und der Verarbeitung der Steuerdaten sowie die Mobilitätsverwaltung (das sogenannte Call Processing) sind in diesen MSCs realisiert.

Um die Flexibilität der Mobilfunk-Kommunikationssysteme zu erhöhen und ihre Anpassung an die Übertragung von Transportdaten unterschiedlicher Art einfacher zu machen, werden im 2000er-Release des UMTS-Standards (Druckschrift 3GPP TR 23.922 V1.0.0 (1999-10) mit dem Titel "Technical Specification Group Services and Systems Aspects; Architecture for an All IP network", herausgegeben von 3^{rd} Generation Partnership Project, Sophia Antipolis, Frankreich, (http://www.3gpp.org) MSCs vorgeschlagen, bei denen die Funktionen Transport und Steuerung der herkömmlichen MSCs auf zwei Funktionseinheiten verteilt sind. Diese Funktionseinheiten werden als Media Gateway MGW und MSC Server bezeichnet.

Ziel dieses Vorschlags ist insbesondere eine möglichst weitgehende Unabhängigkeit der Vermittlungseinrichtungen von der zugrundeliegenden Grundstruktur des Systems wie etwa ATM (Asynchronous Transfer Mode) oder IP (Internet Protocol) zu erreichen, indem die Transportfunktionen, die relativ stark mit der Grundstruktur in Zusammenhang stehen, in einer Funktionseinheit zusammengefaßt werden, während die weniger stark von der Grundstruktur abhängigen Verwaltungsfunktionen des Call Processing von einer eigenen Funktionseinheit ausgeführt werden, deren Aufbau und Arbeitsweise nur in geringerem Umfang durch die Grundstruktur des Systems bestimmt ist und die deshalb leicht von einem Kommunikationssystem auf ein anderes übertragbar ist.

Ein Nachteil dieses Vorschlags ist jedoch, daß diese Aufspaltung in zwei getrennte Funktionsgruppen für den Transport und für die Steuerung ihrerseits mit einem erheblichen Entwicklungsaufwand verbunden ist und in bereits bestehenden Mobilfunk-Kommunikationssystemen nur aufwendig realisierbar ist. Der Umbau einer existierenden MSC in einen MSC Server erfordert beispielsweise die Ausgliederung des herkömmlicherweise in der MSC vorhandenen Koppelfeldes; eine neue Anschaltung für die Kommunikation zwischen MSC Server und Media Gateway ist erforderlich, die Anschaltung diverser Signaltöne muß neu definiert werden und verschiedene Leistungsmerkmale, die ein enges Zusammenspiel von Steuerung und Transport erfordern, wie etwa eine Dreierkonferenz, müssen neu definiert werden.

Die Aufgabe der Erfindung besteht darin, ein Mobilfunk-Kommunikationssystem und ein Verfahren zum Betrieb eines Mobilfunk-Kommunikationssystems anzugeben, die in flexibler Weise die Übertragung von Transportdaten unterschiedlicher Art erlauben, ohne daß dafür ein tiefgreifender Umbau der bestehenden Mobilfunk-Kommunikationsnetze erforderlich ist.

Diese Aufgabe wird durch das Mobilfunk-Kommunikationssystem mit den Merkmalen des Patentanspruchs 1 bzw. das Verfahren mit den Merkmalen des Patentanspruchs 3 gelöst.

Vorteilhafte Ausgestaltungen sind Gegenstand von abhängigen Ansprüchen.

Bei dem erfindungsgemäßen Mobilfunk-Kommunikationssystem ist eine Mobilfunkvermittlungsstelle oder MSC vorgesehen, die aus einem Funknetzbereich des Mobilfunk-Kommunikationssystems sowohl Transportdaten als auch darauf bezogene Steuerdaten empfängt bzw. an diesen überträgt, und die mit dem Festnetzbereich des Mobilfunk-Kommunikationssystems Transportdaten über einen Media Gateway austauscht, der gegebenenfalls notwendige Umsetzungen des Formats der Transportdaten in Abhängigkeit von Vorgaben durch darauf bezogene Steuerdaten vornimmt.

Eine solche MSC kommt wie die MSCs des bekannten GSM-Systems mit zwei Schnittstellen aus, einer ersten Schnittstelle für den Austausch von Transport- und Steuerdaten mit dem Funknetzbereich und einer zweiten für den Austausch von Transport- und Steuerdaten mit dem Festnetzbereich, wobei die Transportdaten, die über diese zweite Schnittstelle laufen, über den Media-Gateway geführt werden, bevor sie - gegebenenfalls mit gewandeltem Format - den Festnetzbereich erreichen.

Eine eigene Schnittstelle für die Kommunikation mit dem Media Gateway ist nicht erforderlich.

Diese Struktur erlaubt deshalb die Weiterverwendung der MSCs der in Betrieb befindlichen Mobilfunk-Kommunikationssysteme mit allenfalls geringfügigen Anpassungen. Die Investitionen der Mobilfunk-Betreiber in ihre Netze sind dadurch geschützt, und das Ziel einer erhöhten Flexibilität, die die Übertragung von Daten unterschiedlicher Art ermöglicht, wird dennoch erreicht.

Ein Ausführungsbeispiel wird nachfolgend anhand der Zeichnung näher erläutert. Es zeigen:
- Fig. 1: schematisch die Struktur eines Mobilfunk-Kommunikationssystems, bei dem die vorliegende Erfindung anwendbar ist;
- Fig. 2: zu Vergleichszwecken eine MSC, deren Aufbau dem 1999er-Release des UMTS-Standards entspricht;
- Fig. 3: zu Vergleichszwecken einen MSC Server und ein Media Gateway MGW gemäß dem 2000er-Release des UMTS-Standards; und
- Fig. 4: eine MSC mit Media Gateway gemäß der vorliegenden Erfindung.

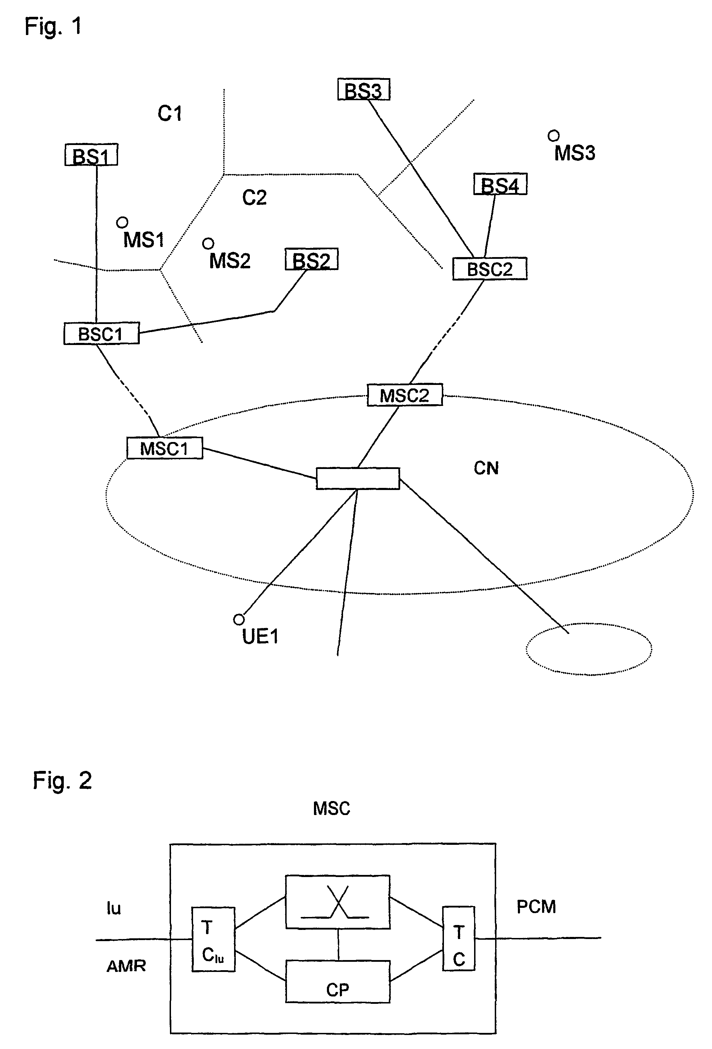

Fig. 1 veranschaulicht die hierarchische Struktur eines Mobilfunk-Kommunikationssystems, bei dem die vorliegende Erfindung anwendbar ist. Ein solches Mobilfunk-Kommunikationssystem umfaßt eine flächendeckende Anordnung von geographischen Zellen C1, C2, ..., die jeweils der Reichweite des Funksignals von Basisstationen BS1, BS2, ... entsprechen, die mit mobilen Endgeräten MS1, MS2, ... kommunizieren, die sich in den jeweiligen Zellen C1 C2, ... aufhalten.

Mehrere Basisstationen BS1, BS2, ... sind jeweils einem Base Station Controller BSC1, BSC2 zugeordnet, und die Base Station Controllers sind jeweils über nicht dargestellte Zwischenstufen mit einer Mobilfunkvermittlungsstelle MSC1, MSC2 verbunden. Die Mobilfunkvermittlungsstellen vermitteln Verbindungen zwischen mobilen Endgeräten, wenn sich beide in Zellen befinden, die jeweils der gleichen Mobilfunkvermittlungsstelle zugeordnet sind, etwa den Endgeräten MS1 und MS2 der Zellen C1 und C2 von Fig. 1, die sich beide in der MSC1 zugeordneten Zellen befinden.

Verbindungen zwischen Endgeräten, die sich nicht einer gleichen MSC zugeordneten Zellen befinden, werden über einen Festnetzbereich des Mobilfunk-Kommunikationssystems, hier als CN für Core Network bezeichnet, vermittelt. Solche Endgeräte können mobile Endgeräte in nicht der gleichen MSC zugeordneten Zellen sein, wie etwa die Endgeräte MS1 und MS3, oder es kann eines der Endgeräte ein leitungsgebundenes Endgerät sein, wie etwa das direkt an CN angeschlossene Endgerät UE1.

Fig. 2 zeigt den Aufbau einer MSC gemäß der bekannten 1999er-Release des UMTS-Standards. Die MSC hat zwei Schnittstellen, die in der Figur jeweils mit den Buchstaben TC für Transport und Control (Steuerung) versehen sind, weil sie für den Austausch sowohl von Transportdaten, also z. B. Sprachinformation oder Dateiübertragung, als auch von Steuerdaten, d. h. von Signalisierungsinformation sowie Information über den Typ und ggf. die Codierung der Transportdaten, vorgesehen sind. Die Schnittstelle zum Funknetzbereich ist z. B. eine Iu-Schnittstelle TC_{Iu}, die AMR-codierte Signale mit dem Funknetzbereich des Mobilfunk-Kommunikationssystems gemäß der Iu-Schnittstellenspezifikation der 3GPP austauscht (siehe z. B. Druckschrift 3G TS 25.410, "Technical Specification Group Radio Access Network; UTRAN Iu Interface: General Aspects and Principles" der 3GPP). Die andere Schnittstelle ist eine PCM-Schnittstelle für den Datenaustausch mit dem Festnetzbereich.

Eintreffende Daten werden von der Schnittstelle aufgeteilt in Steuerdaten, die einer Call-Processing-Einheit CP zugeführt werden, welche das Koppelfeld der MSC ansteuert, und in Transportdaten, welche das Koppelfeld in Richtung der jeweils anderen Schnittstelle durchlaufen.

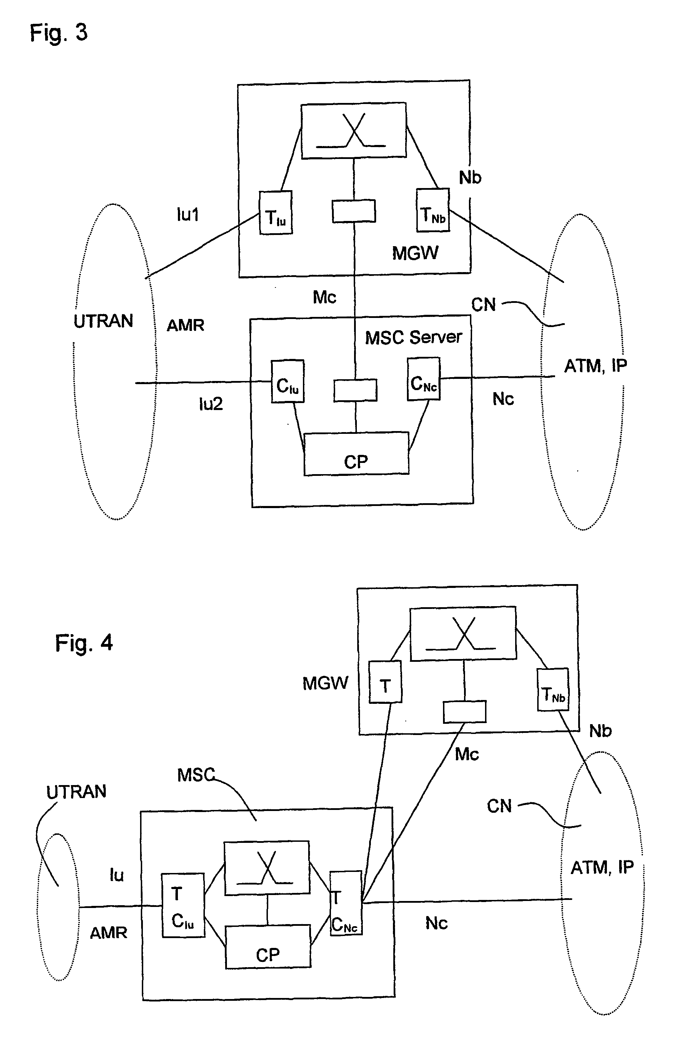

Fig. 3 zeigt den Übergang zwischen Funk- und Festnetzbereich eines Mobilfunk-Kommunikationssystems gemäß 2000er-Release des UMTS-Standards. Die MSC ist hier ersetzt durch einen sogenannten MSC Server und ein Media Gateway MGW. Der MSC Server tauscht über eine Iu²-Schnittstelle C_{Iu} Steuerinformation mit dem Funknetzbereich UTRAN bzw. über eine Nc-Schnittstelle C_{Nc} mit dem Festnetzbereich CN aus. Diese Information wird in einer Call-Processing-Einheit CP des MSC Servers ausgewertet oder in den jeweils anderen Bereich des Mobilfunk-Kommunikationssystems weitergeleitet. Die Schnittstelle C_{Iu} verwendet im Verkehr mit dem Funknetzbereich UTRAN das RANAP-(Radio Access Network Application Part)-Protokoll.

Transportdaten werden zwischen dem Funknetzbereich UTRAN und dem Festnetzbereich CN über den Media Gateway MGW ausgetauscht. Hierfür umfaßt der MGW eine Schnittstelle T_{Iu} zum Funknetzbereich UTRAN, auf der die Transportdaten nach Protokollen wie etwa AAL2, oder - insbesondere für Echtzeit-Multimediaanwendungen - RTP (Real Time Protocol) übertragen werden.

Eine zweite Schnittstelle zum Festnetzbereich ist mit T_{Nb} bezeichnet, sie kann z. B. im Verkehr nach außen mit dem Protokollstack RTP/ UDP (User Datagram Protocol) / IP (Internet Protocol) arbeiten.

Die Vermittlung der Transportdaten zwischen den Schnittstellen erfolgt über ein Koppelfeld, das von dem MSC Server über eine dritte, spezialisierte Schnittstelle Mc gesteuert wird.

Fig. 4 zeigt den Übergang zwischen Funk- und Festnetzbereich eines Mobilfunk-Kommunikationssystems gemäß der vorliegenden Erfindung. Er ist gebildet durch eine MSC von im wesentlichen herkömmlicher Bauart, wie in Fig. 2 dargestellt, mit einer gemeinsamen Schnittstelle TC_{Iu} für den Austausch von Transport- und Steuerdaten mit dem Funknetzbereich UTRAN, einer zweiten Schnittstelle TC_{Nc} für den Datenaustausch mit dem Festnetzbereich CN und einem durch eine Call-Processing-Einheit CP gesteuerten Koppelfeld.

Abweichend von dem in Fig.2 gezeigten Aufbau umfaßt der Übergang gemäß Fig. 4 zusätzlich einen Media Gateway MGW mit einem eigenen Koppelfeld, wie in Fig. 3 dargestellt. Allerdings sind dessen Schnittstelle T für den Datenaustausch mit dem Funknetzbereich UTRAN und Steuerschnittstelle Nc nicht direkt an UTRAN bzw. eine spezialisierte Schnittstelle angeschlossen, so wie in Fig. 3 gezeigt, sondern sie sind alle mit der festnetzseitigen Schnittstelle TC_{Nc} der MSC verbunden.

Die MSC kann somit Transportdaten, die vom Funknetzbereich in den Festnetzbereich übertragen werden sollen, dazugehörige Signalisierungsinformation und Steuerungsinformation für den Media Gateway behandeln wie Daten, die an drei verschiedene Empfänger, nämlich das Festnetz CN (bzw. ein über das Festnetz zu erreichendes Endgerät), die Schnittstelle T bzw. die Schnittstelle Mc des Media Gateway MGW, zu vermitteln sind. Dabei ist es für die MSC weitgehend belanglos, welches Format die Transportdaten haben, die sie aus dem Funknetzbereich empfängt, denn gegebenenfalls notwendige Formatumsetzungen werden von den Schnittstellen des Media Gateway entsprechend der empfangenen Steuerinformation nach Durchgang dieser Daten durch die MSC erledigt.

Aus dem gleichen Grunde ist auch keine Anpassung des Aufbaus der MSC an die für die Weiterübertragung der Transportdaten im Festnetzbereich CN verwendete Struktur erforderlich. Nötig ist lediglich, daß der Media Gateway in der Lage ist, das von der MSC gelieferte Format der Transportdaten zu verarbeiten. Durch Zwischenschaltung eines MGW ist es auf diese Weise möglich, bereits in Betrieb befindliche MSCs weiterzubetreiben, egal, ob der Festnetzbereich, mit dem sie zusammenarbeiten, ein IP-Netzwerk, ein ATM-Netzwerk oder anderes ist.

Die Erfindung ist zwar oben speziell mit Bezug auf ein UMTS-Telekommunikationssystem beschrieben, ist aber ohne weiteres auch in einem GSM-System einsetzbar.

## Patentansprüche

1. Mobilfunk-Kommunikationssystem mit einer zwischen einem Funknetzbereich (UTRAN) des Mobilfunk-Kommunikationssystems und einem Festnetzbereich (CN) angesiedelten Mobilfunkvermittlungsstelle (MSC) für den Austausch von Transport- und Steuerdaten mit dem Funknetzbereich (UTRAN) und von Steuerdaten mit dem Festnetzbereich (CN), bei dem ein Media Gateway (MGW) für die Anpassung des Formats von zwischen dem Festnetzbereich (CN) und dem Funknetzbereich (UTRAN) auszutauschenden Transportdaten zwischen der Mobilfunkvermittlungsstelle (MSC) und dem Festnetzbereich (CN) angeordnet ist, **dadurch gekennzeichnet, dass** die Mobilfunkvermittlungsstelle (MSC) eine einheitliche Schnittstelle (TCNc)für die Übertragung von Transport- und Steuerdaten in Richtung zum und vom Festnetzbereich (CN) aufweist, über die Steuerdaten sowohl in den Festnetzbereich (CN) zur direkten Weiterleitung an einen entfernten Kommunikationspartner als auch in den Media Gateway (MGW) zur Verarbeitung durch diesen übertragen werden.

2. Mobilfunk-Kommunikationssystem nach Anspruch 1, **dadurch gekennzeichnet, dass** es ein UMTS-Telekommunikationssystem oder ein GSM-Telekommunikationssystem ist.

3. Verfahren zur Übertragung von Daten zwischen einem an einen Funknetzbereich eines Mobilfunk-Kommunikationssystems angeschlossenen ersten Endgerät (MS1) und einem zweiten Endgerät (MS3, UE1) mit Hilfe einer Mobilfunkvermittlungsstelle (MSC), die zwischen dem Funknetzbereich (UTRAN) des Mobilfunk-Kommunikationssystems und einem Festnetzbereich (CN) angesiedelt ist, und bei dem Steuer- und Transportdaten der Endgeräte (MS3, UE1) die Mobilfunkvermittungsstelle (MSC) durchlaufen, bei dem die Mobilfunkvermittlungsstelle (MSC) an das zweite Endgerät (MS3, UE1) zu übertragende Transportdaten über ein zwischen der Mobilfunkvermittlungsstelle (MSC) und dem Festnetzbereich angesiedeltes Media Gateway (MGW) zur Anpassung des Formats der Transportdaten an die Anforderungen des Festnetzbereiches (CN) oder des zweiten Endgeräts (MS3, UE1) leitet **dadurch gekennzeichnet, dass** die Mobilfunkvermittlungsstelle (MSC) eine einheitliche Schnittstelle (TCNc)für die Übertragung von Transport- und Steuerdaten in Richtung zum und vom Festnetzbereich (CN) aufweist, über die Steuerdaten sowohl in den Festnetzbereich (CN) zur direkten Weiterleitung an einen entfernten Kommunikationspartner als auch in den Media Gateway (MGW) zur Verarbeitung durch diesen übertragen werden.

## Claims

1. Mobile radio communication system with a mobile switching centre (MSC) located between a radio network area (UTRAN) of the mobile radio communication system and a fixed network area (CN) for the exchange of transport data and control data with the radio network area (UTRAN) and of control data with the fixed network area (CN), in which a media gateway (MGW) is located between the mobile switching centre (MSC) and the fixed network area (CN) to adapt the format of transport data to be exchanged between the fixed network area (CN) and the radio network area (UTRAN), **characterised in that** the mobile switching centre (MSC) has a standard interface (TCNc) for the transfer of transport data and control data to and from the fixed network area (CN), via which control data is transferred both into the fixed network area (CN) for direct forwarding to a remote communication partner and into the media gateway (MGW) to be processed by this.

2. Mobile radio communication system according to Claim 1, **characterised in that** it is a UMTS telecommunications system or a GSM telecommunications system.

3. Method for transferring data between a first terminal (MS1) connected to a radio network area of a mobile radio communication system and a second terminal (MS3, UE1) w ith the aid of a mobile switching centre (MSC), which is located between the radio network area (UTRAN) of the mobile radio communication system and a fixed network area (CN), and with which control data and transport data from the terminals (MS3, UE1) pas s through the mobile switching centre (MSC), in which the mobile switching centre (MSC) forwards transport data to be transferred to the second terminal (MS3, UE1) via a media gateway (MGW) located between the mobile switching centre (MSC) and the fixed network area to adapt the format of the transport data to the requirements of the fixed network area (CN) or of the second terminal (MS3, UE1) , **characterised in that** the mobile switching centre (MSC) has a standard interface (TCNc) for the transfer of transport data and control data to and from the fixed network area (CN), via which control data is transferred both into the fixed network area (CN) for direct forwarding to a remote communication partner and into the media gateway (MGW) to be processed by this.

## Revendications

1. Système de téléphonie mobile comprenant un centre de commutation de radiocommunication mobile (MSC), situé entre un domaine de réseau radio (UTRAN) du système de téléphonie mobile et un domaine de réseau fixe (CN), pour l'échange de données de transport et de données de commande avec le domaine de réseau radio (UTRAN) et de données de commande avec le domaine de réseau fixe (CN), dans lequel un Média Gateway (MGW) est placé pour l'adaptation du format de données de transport à échanger entre le domaine de réseau fixe (CN) et le domaine de réseau radio (UTRAN), entre le centre de commutation de radiocommunication mobile (MSC) et le domaine de réseau fixe (CN), **caractérisé en ce que** le centre de commutation de radiocommunication mobile (MSC) présente une interface uniforme (TCNc) pour la transmission de données de transport et de données de commande en direction du et en provenance du domaine de réseau fixe (CN), au moyen de laquelle des données de commande aussi bien dans le domaine du réseau fixe (CN) sont transmises pour la transmission directe à un partenaire de communication éloigné que dans le Média Gateway (MGW) pour le traitement par celui-ci.

2. Système de téléphonie mobile selon la revendication 1, **caractérisé en ce qu'**il est un système de télécommunication UMTS ou un système de télécommunication GSM.

3. Procédé pour la transmission de données entre un premier terminal (MS1) connecté à un domaine de réseau radio d'un système de téléphonie mobile et un deuxième terminal (MS3, UE1) à l'aide d'un centre de commutation de radiocommunication mobile (MSC) qui est situé entre le domaine du réseau radio (UTRAN) du système de téléphonie mobile et un domaine de réseau fixe (CN), et dans lequel des données de commande et des données de transport des terminaux (MS3, UE1) passent dans le centre de commutation de radiocommunication mobile (MSC), dans lequel le centre de commutation de radiocommunication mobile (MSC) transmet au deuxième terminal (MS3, UE1) des données de transport à transmettre par l'intermédiaire d'un Média Gateway (MGW), situé entre le centre de commutation de radiocommunication mobile (MSC) et le domaine de réseau fixe, pour l'adaptation du format des données de transport aux exigences du domaine du réseau fixe (CN) ou du deuxième terminal (MS3, UE1), **caractérisé en ce que** le centre de commutation de radiocommunication mobile (MSC) présente une interface uniforme (TCNc) pour la transmission de données de transport et de données de commande en direction du et en provenance du domaine de réseau fixe (CN), au moyen de laquelle des données de commande aussi bien dans le domaine du réseau fixe (CN) sont transmises pour la transmission directe à un partenaire de communication éloigné que dans le Média Gateway (MGW) pour le traitement par celui-ci.
